# EUROPEAN PATENT APPLICATION

(11) **EP 4 438 255 A1**
(43) Date of publication of application: **02.10.2024**
(21) Application number: 23165385.8
(22) Date of filing: 30.03.2023
(51) Int. Cl.: B26F 1/02, B26F 1/14, B26F 1/40, B26F 1/44, B62D 25/08, B26D 7/01, B26D 7/02, B60J 5/04

(54) **METHOD FOR PRODUCING A FLAT PLASTIC COMPONENT FOR A MOTOR VEHICLE**

(71) Applicant: Magna Engineered Glass Europe S.à.r.l., 52200 Humes Jorquenay (FR); Magna Exteriors (Bohemia) s.r.o., 460 06 Liberec (CZ)
(72) Inventor: ROBIN, Pierre, 52260 Lannes (FR); DÁRSKÝ, Radim, 463 12 Liberec 25 (CZ)
(74) Representative: Zangger, Bernd

(57) **Abstract**

A method for producing a flat plastic component (1) for a motor vehicle, at least one of the two surfaces of the plastic component (1) having an adhesive tape (2) or an adhesive film, the plastic component (1) and the adhesive tape (2) or adhesive film having at least one, preferably a plurality of apertures over the entire height of the plastic component (1) and of the adhesive tape (2) or adhesive film, wherein the plastic component (1), still without apertures, is provided with the adhesive tape (2) or adhesive film, in that the plastic component (1) which is provided with the adhesive tape (2) or the adhesive film is placed on a die (3), such that the surface having the tape (2) or film is facing the die (3), the die (3) having a circumferential cutting edge (4) on the edge of each desired aperture, in that in each case a punch (5) for each aperture presses the plastic component (1) against the die (3), from the side facing away from the die (3), in order to punch out the aperture, the punch (5) also having a circumferential cutting edge (6), the cutting edges (6) of the punches (5) and the cutting edges (4) of the die (3) corresponding in each case in position and shape to one another.

## Description

### TECHNICAL FIELD

The invention relates to a method for producing a flat plastic component for a motor vehicle, for example a body component of a vehicle.

### BACKGROUND

For the production of motor vehicles, it is known to use flat plastic components, for example as body components for the motor vehicle, for example for a tailgate. Some flat plastic components also have apertures, i.e. openings such as holes or elongated holes, for example for functional reasons or to achieve a desired design of the component. Such flat plastic components can be painted and can serve as a visible surface of the motor vehicle.

To create the apertures in such a flat plastic component, it is known to punch out the aperture or apertures from the plastic component. If the plastic component is provided with an adhesive tape or adhesive film, the apertures are usually made in the plastic component before the adhesive tape or adhesive film is applied, and a pre-cut adhesive tape or adhesive film is then attached to the plastic component provided with the apertures.

Such a manufacturing process is time-consuming and it is difficult to avoid the formation of burrs on the plastic component and on the adhesive tape or adhesive film and thus to produce a visually attractive surface.

### SUMMARY

One object of the invention is therefore to specify an improved method for producing such a flat plastic component for a motor vehicle, which can be carried out simply and inexpensively and in which a visually attractive surface is produced without cutting burrs.

The object of the invention is achieved by a method for producing a flat plastic component for a motor vehicle, at least one of the two surfaces of the plastic component having an adhesive tape or an adhesive film, the plastic component and the adhesive tape or adhesive film having at least one, preferably a plurality of apertures over the entire height of the plastic component and of the adhesive tape or adhesive film, wherein the plastic component, still without apertures, is provided with the adhesive tape or adhesive film, in that the plastic component which is provided with the adhesive tape or the adhesive film is placed on the die, such that the surface having the tape or film is facing the die, the die having a circumferential cutting edge on the edge of each desired aperture, in that in each case a punch for each aperture presses the plastic component against the die, from the side facing away from the die, in order to punch out the aperture, the punch also having a circumferential cutting edge, the cutting edges of the punches and the cutting edges of the die corresponding in each case in position and shape to one another.

According to the invention, for punching a plastic component, whereby the plastic component is provided with a tape or a film, the plastic is punched together with the applied tape/film. According to the invention, this is made possible with a good result by the fact that not only each punch has a cutting edge running around the punch, but also the die has cutting edges running around the desired openings, i.e. apertures. Each cutting edge on the die is assigned to a punch with its cutting edge.

The strip or film lies directly on the cutting edges of the die and is cut through by the cutting edges of the die, while the punch performs the punching from the other side and/or while a hold down element - preferably arranged on both sides of the punch - holds down the plastic component against the die.

The shape of the apertures and therefore the shape of the cutting edges of the die and the punch, can be for example circular or star-shaped or heart-shaped.

A "flat" plastic component in the context of this invention means that the component has two large surfaces - top and bottom - and end faces which are very small compared to the two surfaces. "Flat" does not mean, that the component has to be planar - it can also be bend for example.

Further advantageous embodiments and developments of the invention will become apparent from the dependent claims and from the description when considered together with the figures.

It is advantageous if each cutting edge of the die runs on its flank which is radially inward on the desired opening, straight to a tip. Also, the cutting edge of each punch runs advantageously on its flank which is radially outward on the desired opening, straight to a tip.

It is also advantageous if the cutting edges of the die have an angle of 30 to 60 degrees starting from their tip, preferably 40 to 50 degrees, particularly preferably about 45 degrees. The blades geometry can consist of more than one angle over the blade's height and/or the radiuses to shape the blades can be used.

It is furthermore advantageous if the cutting edges of the die are arranged radially outwardly around the cutting edges of the punches, wherein between the cutting edges of the die and the cutting edges of the punches - more exactly between the tips of the cutting edges of the die and the tips of the cutting edges of the punches - there is no distance or a small distance of about 0.05 mm to 1 mm, preferably a distance of about 0.2 mm.

Preferably the height of the cutting edges of the die corresponds at least to the height of the adhesive tape or adhesive film, preferably the height of the cutting edges of the die is somewhat higher than the height of the adhesive tape or adhesive film, particularly preferably about 105 percent to 150 percent of the height of the adhesive tape or adhesive film.

It is advantageous if the plastic component is painted before the apertures, i.e. the openings, are made by means of the punch and die, i.e. before stamping, and preferably also before the adhesive tape or film is applied.

### DRAWINGS

The present invention is explained in greater detail below with reference to the illustrative embodiments given in the schematic figures of the drawing, in which:
Fig. 1 shows a schematic view of a step in a method for producing a flat plastic component, according to the invention;
Fig. 2 shows a detail view of the step in a method for producing a flat plastic component, according to Fig. 1 detail A.

### DESCRIPTION

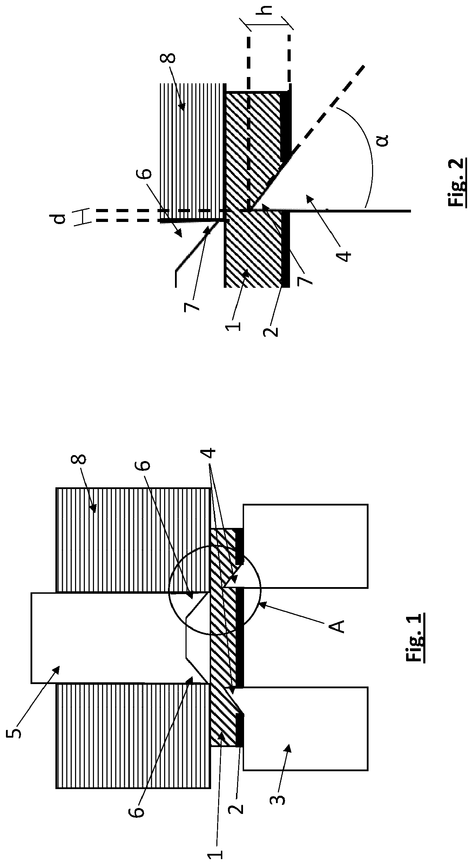

Fig. 1 shows a step in a method for producing a flat plastic component 1, according to the invention, and a tool for producing the flat plastic component 1.

One of the two surfaces of the plastic component 1 - on the bottom of plastic component 1 in Fig. 1 - is equipped with an adhesive tape 2 or an adhesive film. The plastic component 1 has no aperture yet, as it is placed on a die 3. The surface having the tape 2 is facing the die 3. The die 3 has a circumferential cutting edge 4 on the edge of the desired aperture.

A punch 5 is provided for each aperture to press the plastic component 1 against the die 3, from the side facing away from the die 3, in order to punch out the aperture. Radially outside of the punch 5, a hold down element 8 is placed on the top surface of the plastic component 1, which has no tape or foil.

The punch 5 also has a circumferential cutting edge 6. The cutting edge 6 of the punch 5 and the cutting edge 4 of the die 3 correspond in position and shape to one another, i.e. the cutting edges 4, 6 of die 3 and punch 5 are arranged essentially opposite to each other, so that they can cut out the same aperture of the plastic component 1 from both sides.

The cutting edges 4 of the die 3 are arranged radially outwardly around the cutting edges 6 of the punch 5. Between the cutting edges 4 of the die 3 and the cutting edges 6 of the punch 5 there is a small distance d of about 0.05 mm to 1 mm, preferably a distance of about 0.2 mm.

The cutting edge 4 of the die 3 runs radially - concerning the aperture - on the inside straight to a tip 7 of the cutting edge 4 and the cutting edge 6 of the punch 5 runs radially - again concerning the aperture - outward straight to a tip 7 cutting edge 6. This can be seen better in Fig. 2, which shows the detail A from Fig. 1.

As can be seen also in Fig. 2, the two flanks of the cutting edge 4 of the die 3 have an angle α of 30 to 60 degrees starting from their tip 7, preferably 40 to 50 degrees, particularly preferably about 45 degrees.

The blades geometry - i.e. the geometry of the cutting edge - can consist of more than one angle over the blade's height and/or the radiuses to shape the blades can be used.

The height h of the cutting edge 4 of the die 3 corresponds at least to the height of the adhesive tape 2. Preferably the height h of the cutting edge 4 of the die 3 is higher than the height of the adhesive tape 2, for example about 105 percent to 150 percent of the height of the adhesive tape 2 (which is not drawn to scale in Fig. 1).

The plastic component 1 is painted before the apertures are made by means of the punch 5 and die 3. The plastic component 1 can be used as a visible body part of the vehicle, especially as a tailgate.

### LIST OF REFERENCE SIGNS

- 1: plastic component
- 2: adhesive tape
- 3: die
- 4: cutting edge of die
- 5: punch
- 6: cutting edge of punch
- 7: tip
- 8: hold down element

- d: distance
- h: height
- α: angle

## Claims

1. Method for producing a flat plastic component (1) for a motor vehicle, at least one of the two surfaces of the plastic component (1) having an adhesive tape (2) or an adhesive film, the plastic component (1) and the adhesive tape (2) or adhesive film having at least one, preferably a plurality of apertures over the entire height of the plastic component (1) and of the adhesive tape (2) or adhesive film, **characterized in that** the plastic component (1), still without apertures, is provided with the adhesive tape (2) or adhesive film, **in that** the plastic component (1) which is provided with the adhesive tape (2) or the adhesive film is placed on a die (3), such that the surface having the tape (2) or film is facing the die (3), the die (3) having a circumferential cutting edge (4) on the edge of each desired aperture, **in that** in each case a punch (5) for each aperture presses the plastic component (1) against the die (3), from the side facing away from the die (3), in order to punch out the aperture, the punch (5) also having a circumferential cutting edge (6), the cutting edges (6) of the punches (5) and the cutting edges (4) of the die (3) corresponding in each case in position and shape to one another.

2. Method according to claim 1,
**characterized in that** each cutting edge (4) of the die (3) runs radially inward straight to a tip (7) and/or that the cutting edge (6) of each punch (5) runs radially outward straight to a tip (7).

3. Method according to any of the preceding claims,
**characterized in that** the cutting edges (4) of the die (3) have an angle (α) of 30 to 60 degrees starting from their tip (7), preferably 40 to 50 degrees, particularly preferably about 45 degrees.

4. Method according to any of the preceding claims,
**characterized in, that** the cutting edges (4) of the die (3) are arranged radially outwardly around the cutting edges (6) of the punches (5), wherein between the cutting edges (4) of the die (3) and the cutting edges (6) of the punches (5) there is no distance (d) or a small distance (d) of about 0.05 mm to 1 mm, preferably a distance of about 0.2 mm.

5. Method according to any of the preceding claims,
**characterized in, that** the height (h) of the cutting edges (4) of the die (3) corresponds at least to the height of the adhesive tape (2) or adhesive film, preferably the height (h) of the cutting edges (4) of the die (3) is somewhat higher than the height of the adhesive tape (2) or adhesive film, particularly preferably about 105 percent to 150 percent of the height of the adhesive tape (2) or adhesive film.

6. Method according to any of the preceding claims,
**characterized in, that** the plastic component (1) is painted before the apertures are made by means of the punch (5) and die (3), i.e. before stamping, and preferably also before the adhesive tape (2) or film is applied.
